# EUROPEAN PATENT SPECIFICATION

(11) **EP 4 113 681 B1**
(45) Date of publication and mention of the grant of the patent: **29.04.2026**
(21) Application number: 21892202.9
(22) Date of filing: 28.10.2021
(51) Int. Cl.: H01M 10/04, H01M 10/44, H01M 10/058, H01M 10/615, H01M 10/647, H01M 10/6571, H01M 50/20

(54) **BATTERY CELL TRAY FOR IMPROVING WETTING PROPERTY OF ELECTROLYTE AND METHOD FOR ACTIVATING BATTERY CELL USING SAME**
BATTERIEZELLENSCHALE ZUR VERBESSERUNG DER BENETZUNGSEIGENSCHAFTEN EINES ELEKTROLYTEN UND VERFAHREN ZUR AKTIVIERUNG EINER BATTERIEZELLE DAMIT
PLATEAU DE CELLULE DE BATTERIE PERMETTANT D'AMÉLIORER LA PROPRIÉTÉ DE MOUILLAGE D'UN ÉLECTROLYTE ET PROCÉDÉ D'ACTIVATION D'UNE CELLULE DE BATTERIE L'UTILISANT

(30) Priority: 16.11.2020 KR 20200152528
(43) Date of publication of application: 04.01.2023
(73) Proprietor: LG Energy Solution, Ltd., Seoul 07335 (KR)
(72) Inventor: AN, Mi Ae, Daejeon 34122 (KR); OH, Jung Shik, Daejeon 34122 (KR)
(74) Representative: Goddar, Heinz J.
(86) International application number: PCT/KR2021/015334
(87) International publication number: WO 2022/103032

(56) References cited:
- JP-A- 2010 160 932
- JP-B2- 5 932 886
- KR-A- 20110 051 019
- KR-A- 20160 032 530
- KR-A- 20160 054 443
- KR-A- 20160 054 443
- KR-A- 20180 082 759
- KR-B1- 102 116 384

## Description

### [Technical Field]

This application claims the benefit of priority based on Korean Patent Application No. 10-2020-0152528, filed on November 16, 2020.

The present invention relates to a battery cell tray for improving a wetting property of an electrolyte solution, and a method of forming a battery cell using the same.

### [Background Art]

With the development of technology and demand for mobile devices, the demand for batteries as energy sources is rapidly increasing, and accordingly, a lot of researches on batteries capable of meeting various demands have been conducted.

Typically, in terms of the shape of the battery, there is a high demand for a prismatic secondary battery and a pouch-type secondary battery that can be applied to products such as mobile phones with a small thickness. In terms of materials, there is a high demand for lithium secondary batteries such as lithium ion batteries and lithium ion polymer batteries having advantages such as high energy density, discharge voltage, and output stability.

Particularly, secondary batteries attracted a lot of attention due to their low manufacturing costs, small weight and high deformability, and their usage gradually increases.

**In** order to manufacture such a secondary battery, an electrode assembly is embedded in a battery case, and an electrolyte solution is injected, which is then impregnated to prepare a battery cell. Thereafter, a secondary battery is manufactured by allowing the battery cell to go through a formation process.

**In** the conventional art, in order to manufacture a battery cell, an electrolyte solution was injected, and the electrolyte solution at the lower portion was raised to impregnate an erected battery cell. And in order to allow the electrolyte solution to be appropriately impregnated in the active materials in the electrode, the battery cell was put in a wetting chamber and was then vacuum-pressed and vacuum-sealed, to thereby manufacture a battery cell.

Further, in order to improve the impregnation property of the electrolyte solution, the pre-aging process, which was performed before charge and discharge, the room temperature aging process, and the high temperature aging process, which were performed after charge and discharge, were essential in the formation process.

The room temperature aging and high temperature aging in the formation process require about 6 to 7 days, and the aging is performed in a state that the battery cell has been erected. Further, since the battery cell is erected, the electrolyte solution is concentrated on the lower end of the battery cell. As such, the electrode is not sufficiently impregnated, which affects the performance of the battery cell.

Hence, there is a need for improving the wetting property of an electrolyte solution during the activation process of the formation process of a battery cell.

### [Disclosure]

### [Technical Problem]

The present invention is believed to solve at least some of the above problems. For example, an aspect of the present invention provides a battery cell tray for improving a wetting property of an electrolyte solution in a battery cell during an aging process, and a method of forming a battery cell using the same.

### [Technical Solution]

The present invention provides a battery cell tray for improving a wetting property of an electrolyte solution. A battery cell tray according to the present invention is specified in claim 1 and it includes: a tray body having a storage space therein; and first and second plates arranged in the storage space of the tray body, the first and second plates being configured to support opposite surfaces of at least one battery cell to allow the battery cell to be mounted in an erect state, the first and second plates being movable in a horizontal direction in the storage space, and each of the first and second plates having a heating member therein.

In a specific example, each heating member is one of a heat wire, a planar heating element, an induction heater, or an electric heater.

According to the invention, the first and second plates have a height corresponding to 3/10 to 5/10 of a height of a region of the battery cell having an electrode assembly.

In one example, an interval adjusting member is located between the first and second plates to adjust an interval between the first and second plates. In a specific example, the interval adjusting member is a coil spring or a rubber material.

According to the invention, the first and second plates define one pair of plates, and the battery cell tray has n pairs of plates. Herein, n is an integer equal to or greater than 2.

According to the invention, an elastic pressing member is included between a k-th second plate and a (k+1)-th first plate. Herein, k is an integer equal to or greater than 1 and equal to or less than n-1. In a specific example, the elastic pressing member is a coil spring, a leaf spring, or a rubber material.

Further, the at least one battery includes a plurality of battery cells arranged along the first and second plates.

Further, the present invention provides a method of activating a battery cell using the above-described battery cell tray.The present invention relates to a method of activating a battery cell including a positive electrode, a negative electrode, and a separator interposed between the positive electrode and the negative electrode, and the method includes: mounting the battery cell on the battery cell tray according to claim 1, and aging the battery cell mounted in the battery cell tray. At this time, the aging of the battery cell includes applying heat to the battery cell.

In one example, the aging of the battery cell includes applying heat in a temperature range of 50 to 80°C to the battery cell.

Further, the aging is performed for about 12 to 48 hours. In a specific example, the applying of heat is performed for about 5 to 15 minutes per hour.

### [Advantageous Effects]

According to a battery cell tray for improving a wetting property of an electrolyte solution, and a method of forming a battery cell using the same of the present invention, since the battery cell tray has a heating member in first and second plates which support the battery cell, it is possible to apply heat to the battery cell during the aging process of the battery cell, and accordingly it is possible to improve the wetting property of the electrolyte solution for the electrode assembly in a battery cell by improving the moving speed of the electrolyte solution.

### [Brief Description of the Drawings]

FIG. 1 is a schematic diagram showing a battery cell tray according to one embodiment of the present invention.
FIG. 2 is a schematic diagram showing a state that a battery cell is disposed between first and second plates in a battery cell tray according to one embodiment of the present invention.
FIG. 3 is a schematic diagram showing a state that a battery cell is disposed between first and second plates in a battery cell tray according to one embodiment of the present invention.
FIG. 4 is a schematic diagram showing a battery cell tray according to another embodiment of the present invention.

### [Detailed Description of the Preferred Embodiments]

In this application, it should be understood that terms such as "include" or "have" are intended to indicate that there is a feature, number, step, operation, component, part, or a combination thereof described on the specification, and they do not exclude in advance the possibility of the presence or addition of one or more other features or numbers, steps, operations, components, parts or combinations thereof. Also, when a portion such as a layer, a film, an area, a plate, etc. is referred to as being "on" another portion, this includes not only the case where the portion is "directly on" the another portion but also the case where further another portion is interposed therebetween. On the other hand, when a portion such as a layer, a film, an area, a plate, etc. is referred to as being "under" another portion, this includes not only the case where the portion is "directly under" the another portion but also the case where further another portion is interposed therebetween. In addition, to be disposed "on" in the present application may include the case disposed at the bottom as well as the top.

The present invention relates to a battery cell tray for improving a wetting property of an electrolyte solution, and a method of activating a battery cell using the same.

Generally, in order to manufacture a battery cell, an electrolyte solution was injected, and the electrolyte solution at the lower portion was raised to impregnate an erected battery cell. And in order to allow the electrolyte solution to be appropriately impregnated in the active materials in the electrode, the battery cell was put in a wetting chamber and was then vacuum-pressed and vacuum-sealed, to thereby manufacture a battery cell. Further, in order to improve the impregnation property of the electrolyte solution for the electrode assembly in the battery cell, the pre-aging process, which is performed before charge and discharge, the room temperature aging process, and the high temperature aging process were essential in the formation process. Further, the aging process is performed in a state that the battery cell has been erected. However, since the battery cell is erected, the electrolyte solution is concentrated on the lower end of the battery cell. As such, the electrode assembly is not sufficiently impregnated, which affects the performance of the battery cell.

As such, the present invention provides a battery cell tray for improving a wetting property of an electrolyte solution in a battery cell during an aging process, and a method of forming a battery cell using the same. Specifically, since the battery cell tray according to the present invention has a heating member in first and second plates which support the battery cell, it is possible to apply heat to the battery cell during the aging process of the battery cell. As such, it is possible to improve the wetting property of the electrolyte solution for the electrode assembly in a battery cell by improving the moving speed of the electrolyte solution during the aging process in the formation process of the battery cell.

Hereinafter, a battery cell tray for improving a wetting property of an electrolyte solution, and a method of forming a battery cell using the same according to the present invention will be described in detail.

A battery cell tray according to the present invention includes: a tray body having a storage space therein; and first and second plates which are arranged in the storage space of the tray body, support two surfaces of at least one battery cell to allow the battery cell to be mounted in an erect state, and are moved in a horizontal direction. At this time, the first and second plates have a heating member therein.

In one example, the battery cell tray according to the present invention is used to apply heat to the battery cell during the aging process of the formation process of the battery cell. More specifically, it is to improve the wetting property of the electrolyte solution for the electrode assembly in a battery cell by improving the moving speed of the electrolyte solution by applying heat to the battery cell during the aging process in the formation process of the battery cell.

A battery cell tray according to the present invention includes a tray body having a storage space therein. In a specific example, the tray body has a tray shape having a storage space and has a sidewall surrounding the bottom surface and has an open top portion.

According to the invention, a plate is disposed in the storage space of the tray body. The plate according to the invention includes first and second plates, and the first and second plates support the battery cell so that the battery cell may be mounted in an erect state.

According to the invention, the first and second plates form one pair, and one pair of plates support a battery cell while having the battery cell therebetween. Herein, since the battery cell accommodated in the tray body preferably contacts the plate, two surfaces of the battery cell are allowed to contact the first and second plates, respectively by adjusting the interval between the first and second plates. One side surface of the battery cell is formed to contact the inner surface of the first plate, and the other side surface of the battery cell is formed to contact the inner surface of the second plate.

According to the invention, the first and second plates have a heating member therein. The heating member is used to apply heat to at least battery cell disposed between the first and second plates and may be at least one selected from the group consisting of a heat wire, a planar heating element, an induction heater, and an electric heater. For example, the first and second plates have a heat wire therein.

More specifically, heat may be applied to the battery cell by the heating member during the aging process of the battery cell. This is performed to further improve the wetting property of the electrolyte solution by raising the temperature. At this time, specific aging time may be changed, depending on the temperature. The average temperature, which is applied to the heating member during the aging process of the battery cell, may be in the range of 50 to 80°C, 60 to 70°C, or may be about 65°C. Further, when the temperature of the heating member is less than 50°C, it is not advantageous for impregnation of the electrolyte solution, and when the temperature exceeds 80°C, it is not desirable because it may affect the electrode materials inside the battery cell.

In one example, first and second plates are disposed in a battery cell tray according to the present invention. At this time, the height H1 of the first and second plates corresponds to 3/10 to 5/10 of an entire height H2 of the battery cell. For example, in the battery cell tray according to the present invention, the height H1 of the first and second plates corresponds to 4/10 of the entire height H2 of the battery cell. Herein, the entire height of the battery cell means the region where an electrode assembly has been accommodated in a battery cell.

Further, when the height H1 of the first and second plates corresponds to 3/10 or less of the entire height H2 of the battery cell, the battery cells mounted on the tray body may not be easily disposed. In a specific example, the first and second plates are used not to increase the flatness of the battery cell, but to impregnate the entire electrode assembly with the electrolyte solution concentrated on the lower end of the battery cell. Namely, the battery cell tray of the present invention is used to enhance the moving speed of the electrolyte solution concentrated on the lower end of the battery cell by applying heat to the lower end of the battery cell.

In one example, a plurality of battery cells may be arranged along the first and second plates.

In one example, the first and second plates are configured to support two surfaces of the battery cell while having the battery cell therebetween so that the battery cell can be mounted in an erect state on the tray body. Further, the first and second plates may be disposed in a storage space of a tray body to be movable in a horizontal direction. Herein, the horizontal direction means a direction in which the first and second plates are moved to become closer to each other or farther away from each other while having a battery cell therebetween. Namely, the first and second plates may be moved in a direction in which the battery cell is mounted when supporting the battery cell, and the first and second plates may be moved in a direction in which they become farther away from each other in the region where the battery cell has been mounted when removing the battery cell.

In another example, the first and second plates include an interval adjusting member which adjusts an interval between the first and second plates. In a specific example, the interval adjusting member is formed of a coil spring or a rubber material. For example, the interval adjusting member is a coil spring.

In a specific example, one side of the coil spring is connected to the inner surface of the first plate, and the other side of the coil spring is connected to the inner surface of the second plate. Further, the coil spring is a tension coil spring and may be a spring which applies force in a direction in which the first and second plates are pulled to each other. The first and second plates may allow at least battery cell to be easily disposed by including an interval adjusting member.

A battery cell tray according to the present invention includes: a tray body having a storage space therein; and first and second plates which are arranged in the storage space of the tray body, support two surfaces of at least one battery cell to allow the battery cell to be mounted in an erect state, and are moved in a horizontal direction. Further, the first and second plates form one pair, and n pairs of first and second plates are included. Herein, the n is an integer equal to or greater than 2. Herein, the n is an integer between 2 to 20, 2 to 15, 2 to 10, 2 to 7, or 2 to 4. However, the present invention is not limited thereto.

In further another example, an elastic pressing member is included between a k-th second plate and a (k+1)-th first plate in the battery cell tray according to the present invention. Herein, the k is an integer equal to or greater than 1 and equal to or less than n-1. In a specific example, an elastic pressing member may be disposed between a 1st second plate and a 2nd first plate. Constant pressure may be applied to two side surfaces of the plate by the elastic pressing member. The elastic pressing member is a member which applies constant pressure in a direction in which a battery cell is disposed.

In a specific example, the elastic pressing member is a coil spring, a leaf spring, or a rubber. For example, the elastic pressing member is a coil spring. The coil spring is a spring having a force resistant to the compressive force and refers to a compression spring.

In further another example, an elastic pressing member is also included in a plate arranged in the outermost side of the tray body. At this time, the elastic pressing member may be disposed between the sidewall of the tray body and the plate.

Further, the present invention provides a method of activating a battery cell using the above-described battery cell tray. Specifically, the present invention relates to a method of activating a battery cell including a positive electrode, a negative electrode, and a separator interposed between the positive electrode and the negative electrode, and the method includes: aging a battery cell in a state that the battery cell has been mounted on the battery cell tray. At this time, the aging of the battery cell includes applying heat to the battery cell. Further, the aging may mean pre-aging which is performed before and after the formation process.

Particularly, according to the present invention, the wetting property of the electrolyte solution for the electrode assembly in the battery cell can be improved by applying heat to the battery cell during the aging process. Further, according to the present invention, the aging time can be significantly reduced by improving the wetting property of the electrolyte solution for an electrode assembly in a battery cell.

In one example, the aging of the battery cell includes applying heat in a temperature range of 50 to 80°C to the battery cell. In a specific example, heat may be applied to the battery cell by the heating member of the battery cell tray according to the present invention during the aging process of the battery cell. This is performed to further improve the wetting property of the electrolyte solution by raising the temperature. At this time, specific aging time may be changed, depending on the temperature. The average temperature, which is applied to the heating member during the aging process of the battery cell, may be in the range of 50 to 80°C, 60 to 70°C, or may be about 65°C. Further, when the temperature of the heating member is less than 50°C, it is not advantageous for impregnation of the electrolyte solution, and when the temperature exceeds 80°C, it is not desirable because it may affect the electrode materials inside the battery cell.

In one example, the aging is performed for about 12 to 48 hours on average. In a specific example, the aging is performed for about 12 to 48 hours on average. Unlike the conventional technology in which vacuum pressure is applied during only the impregnation process of the electrolyte solution, battery cells are pressed by the first and second plates and heat is applied throughout the aging period, thereby maintaining the state that the electrode is impregnated with the electrolyte solution. As such, the aging time can be significantly reduced to about 12 to 24 hours.

In one example, the applying of heat is performed for about 5 to 15 minutes per hour. For example, the applying of heat to the battery cell may be performed for 10 minutes per hour. As such, it is possible to improve the wetting property of the electrolyte solution for the electrode assembly in a battery cell by improving the moving speed of the electrolyte solution during the aging process in the formation process of the battery cell.

Further, in the present invention, the battery cell refers to a battery cell in the formation process at the time of manufacturing a battery cell, and means a preliminary battery cell. In a specific example, the battery cell has a structure of including an electrode assembly including a positive electrode, a negative electrode, and a separator interposed between the positive electrode and the negative electrode; an non-aqueous electrolyte solution impregnating the electrode assembly; and a battery case containing the electrode assembly and the non-aqueous electrolyte solution. The non-aqueous electrolyte solution is, for example, an electrolyte solution containing a lithium salt.

The positive electrode has a structure in which a positive electrode mixture layer is stacked on one or both sides of a positive electrode current collector. **In** one example, the positive electrode mixture layer includes a positive electrode active material, a conductive material and a binder polymer, etc. and if necessary, may further include a positive electrode additive commonly used in the art.

The positive electrode active material may be a lithium-containing oxide, and may be the same or different. A lithium-containing transition metal oxide may be used as the lithium-containing oxide.

For example, the lithium-containing transition metal oxide may be any one or a mixture of two or more selected from the group consisting of LiₓCoO₂(0.5<x<1.3), LiₓNiO₂(0.5<x<1.3), LiₓMnO₂(0.5<x<1.3), LiₓMn₂O₄(0.5<x<1.3), Liₓ(NiₐCo_{b}Mn_{c})O₂(0.5<x<1.3, 0<a<1, 0<b<1, 0<c<1, a+b+c=1), LiₓNi_{1-y}Co_{y}O₂(0.5<x<1.3, 0<y<1), LiₓCo_{1-y}Mn_{y}O₂(0.5<x<1.3, 0≤y<1), LiₓNi_{1-y}Mn_{y}O₂(0.5<x<1.3, O≤y<1), Liₓ(NiₐCo_{b}Mn_{c})O₄(0.5<x<1.3, 0<a<2, 0<b<2, 0<c<2, a+b+c=2), LiₓMn_{2-z}Ni_{z}O₄(0.5<x<1.3, 0<z<2), LiₓMn_{2-z}Co_{z}O₄(0.5<x<1.3, 0<z<2), LiₓCoPO₄(0.5<x<1.3) and LiₓFePO₄(0.5<x<1.3), and the lithium-containing transition metal oxide may be coated with a metal or metal oxide such as aluminum (Al). Further, in addition to the lithium-containing transition metal oxide, one or more of sulfide, selenide, and halide may be used.

The positive electrode according to the present invention can be applied to various types of lithium secondary batteries, but is preferably used for high-power batteries. The positive electrode active material layer of the present invention is applied to a high content nickel (High-Ni)-based NCM battery.

In a specific example, the positive electrode active material layer according to the present invention includes an active material component having a structure represented by Chemical Formula 1 or Chemical Formula 2 below.

[Chemical formula 1] Liₓ(NiₐCo_{b}Mn_{c})O₂

(0.5<x<1.3, 0.5<a<1, 0<b<0.25, 0<c<0.25, a+b+c=1)

In Chemical Formula 1, the value a is 0.6 or more, specifically 0.8 or more. In the Formula 1, as the value a increases, the value b and/or value c decrease within the range satisfying the above Formula 1. Through this, the positive electrode for a lithium secondary battery according to the present invention is applied to a high-Ni-based NCM secondary battery.

[Chemical formula 2] Liₓ(NiₐCo_{b}Mn_{c}Al_{d})O₂

where 0.5<x<1.3, 0.6<a<1, 0<b<0.2, 0<c<0.2, 0<d<0.1, a+b+c+d=1.

**In** the Chemical Formula 2, "a" is equal to or greater than 0.6, specifically, equal to or greater than 0.8, and more specifically, equal to or greater than 0.85.

The NCM secondary battery may be, for example, NCM 622, NCM 651520, NCM 712 or NCM 811 (Ni ≥ 80%). **In** the case of NCMA, the output is high while maintaining stability as in NCM by adding aluminum while reducing the cobalt ratio.

The current collector used for the positive electrode is a metal having high conductivity, and any metal which the positive electrode active material slurry may be easily attached to and which is not reactive in the voltage range of the electrochemical device can be used. Specifically, non-limiting examples of the current collector for the positive electrode include aluminum, nickel, or a foil manufactured by a combination thereof.

The positive electrode active material may be included in the range of 90.0 to 98.5 wt% in the positive electrode mixture layer. When the content of the positive electrode active material satisfies the above range, it is advantageous in terms of manufacturing a high-capacity battery and providing sufficient conductivity of the positive electrode or adhesion between electrode materials.

The current collector used for the positive electrode is a metal having high conductivity, and any metal which the positive electrode active material slurry may be easily attached to and which is not reactive in the voltage range of the secondary battery can be used. Specifically, non-limiting examples of the current collector for the positive electrode include aluminum, nickel, or a foil manufactured by a combination thereof.

The positive electrode mixture layer further includes a conductive material. The conductive material is usually added in an amount of 1 to 30% by weight based on the total weight of the mixture including the positive electrode active material. Such a conductive material is not particularly limited as long as it has conductivity without causing a chemical change in the secondary battery. For example, graphite such as natural graphite or artificial graphite; carbon black such as carbon black, acetylene black, ketjen black, channel black, furnace black, lamp black, or thermal black; conductive fiber such as carbon fiber or metal fiber; metal powder such as carbon fluoride, aluminum, or nickel powder; conductive whiskey such as zinc oxide or potassium titanate; conductive metal oxide such as titanium oxide; polyphenylene derivative, and carbon nano tube (CNT) may be used as the conductive material.

As the binder component, a binder polymer commonly used in the art may be used without limitation. For example, various kinds of binders such as polyvinylidene fluoride-co-hexafluoropropylene (PVDF-co-HFP), polyvinylidene fluoride (PVDF), polyacrylonitrile, polymethyl methacrylate, styrene-butadiene rubber (SBR), and carboxyl methyl cellulose (CMC) may be used.

The binder polymer content is proportional to the conductive material content included in the positive electrode mixture layer. This is to impart adhesion to conductive materials whose particle size is relatively small compared to the active material and is because when the content of the conductive material increases, more binder polymer is required, and when the content of the conductive material decreases, less binder polymer can be used.

The negative electrode may include a negative electrode current collector, and a mixture layer of a double layer structure formed on the negative electrode current collector.

Non-limiting examples of the current collector used for the negative electrode include copper, gold, nickel, or a foil manufactured by a copper alloy or a combination thereof. In addition, the current collector may be used by stacking substrates made of the above materials.

The separator may be made of any porous substrate used in a lithium secondary battery, and for example, a polyolefin-based porous membrane or a nonwoven fabric may be used, but the present invention is not particularly limited thereto.

Examples of the polyolefin-based porous membrane include polyethylene such as high density polyethylene, linear low density polyethylene, low density polyethylene, ultrahigh molecular weight polyethylene, and a membrane in which polyolefin-based polymers, such as polypropylene, polybutylene, or polypentene, are each formed alone or in a mixture thereof.

Polyethyleneterephthalate, polybutyleneterephthalate, polyester, polyacetal, polyamide, polycarbonate, polyimide, polyetheretherketone, polyethersulfone, polyphenyleneoxide, polyphenylenesulfide, and polyethylenenaphthalene, etc. may be used individually or as a polymer by a mixture thereof, to thereby form the non-woven fabric, in addition to polyolefin-based nonwoven fabric.

The structure of the nonwoven fabric may be a spunbonded nonwoven fabric composed of long fibers or a melt blown nonwoven fabric.

The thickness of the porous substrate is not particularly limited, but may be 5 to 50 µm, and the pore size and porosity present in the porous substrate are also not particularly limited, but may be 0.01 to 50 µm and 10 to 95%, respectively.

Meanwhile, in order to improve mechanical strength of the separator composed of the porous substrate and to suppress a short circuit between the positive electrode and the negative electrode, a porous coating layer including inorganic particles and a binder polymer may be further included on at least one surface of the porous substrate.

The electrolyte solution may contain an organic solvent and an electrolyte salt, and the electrolyte salt is a lithium salt. Those conventionally used in the electrolyte solution for lithium secondary batteries may be used as the lithium salt without limitation. For example, one or more selected from the group consisting of F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, CF₃(CF₂)₇SO₃⁻, CF₃CO₂⁻, CH₃CO₂⁻, SCN⁻ and (CF₃CF₂SO₂)₂N⁻ may be included as the anion of the lithium salt.

As the organic solvent included in the electrolyte solution described above, those conventionally used in electrolyte solutions for lithium secondary batteries may be used without limitation, and for example, ethers, esters, amides, linear carbonates, and cyclic carbonates may be used alone or in combination of two or more. Among them, representatively, a cyclic carbonate, a linear carbonate, or a carbonate compound that is a mixture thereof may be included.

Specific examples of the cyclic carbonate compound include any one selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, vinylethylene carbonate, and a halide thereof, and a mixture thereof.

These halides include, for example, fluoroethylene carbonate (FEC), but are not limited thereto.

**In** addition, specific examples of the linear carbonate compound include any one selected from the group consisting of dimethyl carbonate (DMC), diethyl carbonate (DEC), dipropyl carbonate, ethylmethyl carbonate (EMC), methylpropyl carbonate, and ethylpropyl carbonate, or a mixture of two or more of them may be typically used, but is not limited thereto.

**In** particular, among the carbonate-based organic solvents, ethylene carbonate and propylene carbonate, which are cyclic carbonates, are organic solvents of high viscosity and have high dielectric constants, so that lithium salts in the electrolyte can be more easily dissociated, and if the cyclic carbonate is mixed with a low viscosity, low dielectric constant linear carbonate such as dimethyl carbonate and diethyl carbonate in an appropriate ratio, an electrolyte solution having a higher electrical conductivity can be prepared.

**In** addition, as the ether of the organic solvent, any one selected from the group consisting of dimethyl ether, diethyl ether, dipropyl ether, methylethyl ether, methylpropyl ether, and ethylpropyl ether, or a mixture of two or more thereof may be used, but is not limited thereto.

And esters among the organic solvents include any one selected from the group consisting of methyl acetate, ethyl acetate, propyl acetate, methyl propionate, ethyl propionate, propyl propionate, γ-butyrolactone, γ-valerolactone, and γ-caprolactone, α-valerolactone, and ε-caprolactone or a mixture of two or more of them, but the present invention is not limited thereto.

The injection of the non-aqueous electrolyte may be performed at an appropriate step in the manufacturing process of the secondary battery, depending on the manufacturing process and required physical properties of the final product.

### [Detailed Description of the Preferred Embodiments]

Hereinafter, various forms of a battery cell tray for improving a wetting property of an electrolyte solution, and a method of forming a battery cell using the same according to the present invention will be described in detail with reference to drawings.

### (First embodiment)

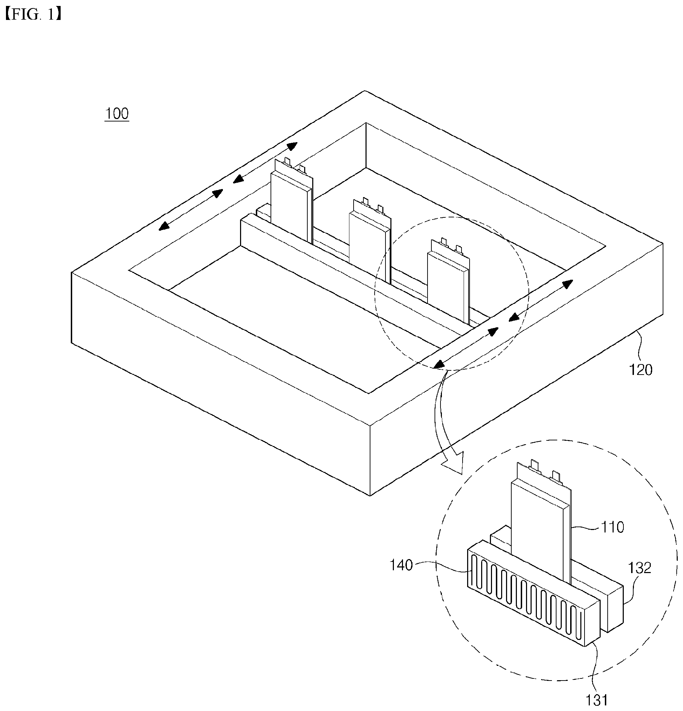

FIG. 1 is a schematic diagram showing a battery cell tray according to one embodiment not according to the present invention.

Referring to FIG. 1, a battery cell tray 100 according to the present invention includes: a tray body 120 having a storage space therein; and first and second plates 131 and 132 which are arranged in the storage space of the tray body 120, support two surfaces of at least one battery cell 110 to allow the battery cell 110 to be mounted in an erect state, and are moved in a horizontal direction.

At this time, the first and second plates 131 and 132 have a heating member 140 therein.

The battery cell tray 100 according to the present invention is used to apply heat to the battery cell 110 during the aging process of the formation process of the battery cell 110. More specifically, it is to improve the wetting property of the electrolyte solution for the electrode assembly in a battery cell 110 by improving the moving speed of the electrolyte solution by applying heat to the battery cell 110 during the aging process in the formation process of the battery cell 110.

First, the battery cell tray 100 includes a tray body 120 having a storage space therein. Specifically, the tray body 120 has a tray shape having a storage space and has a sidewall surrounding the bottom surface and has an open top portion.

Further, a pair of plates 130 is disposed in the storage space of the tray body 120. Specifically, the pair of plates 130 includes first and second plates 131 and 132, and the first and second plates 131 and 132 support the battery cell 110 so that the battery cell 110 may be mounted in an erect state.

The first and second plates 131 and 132 form one pair, and one pair of plates 130 support a battery cell 110 while having the battery cell 110 therebetween. Herein, since the battery cell 110 accommodated in the tray body 120 preferably contacts the pair of plates 130, two surfaces of the battery cell 110 are allowed to contact the first and second plates 131 and 132, respectively by adjusting the interval between the first and second plates 131 and 132. One side surface of the battery cell 110 is formed to contact the inner surface of the first plate 131, and the other side surface of the battery cell 110 is formed to contact the inner surface of the second plate 132.

The first and second plates 131 and 132 have a heating member 140 therein. Specifically, the first and second plates 131 and 132 have a heat wire therein. More specifically, heat may be applied to the battery cell 110 by the heating member 140 during the aging process of the battery cell 110. This is performed to further improve the wetting property of the electrolyte solution by raising the temperature. At this time, specific aging time may be changed, depending on the temperature. The average temperature, which is applied to the heating member 140 during the aging process of the battery cell 110, may be in the range of 50 to 80°C.

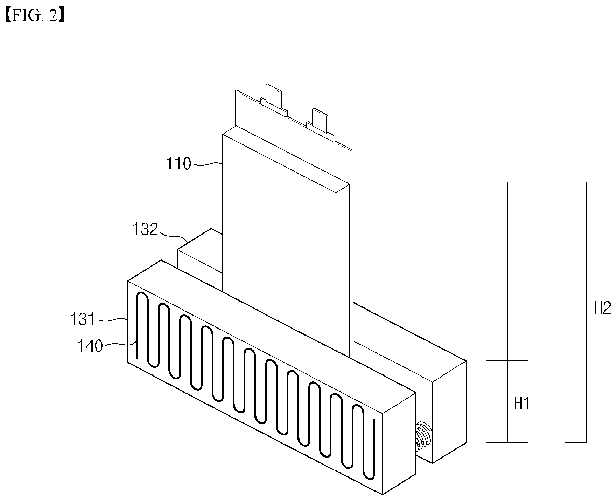

FIG. 2 is a schematic diagram showing a state that a battery cell is disposed between first and second plates in a battery cell tray according to one embodiment of the present invention.

Referring to FIG. 2, in the battery cell tray according to the present invention, the height H1 of the first and second plates 131 and 132 corresponds to 4/10 of the entire height H2 of the battery cell. Herein, the entire height H2 of the battery cell 110 means the region where an electrode assembly has been accommodated in a battery cell 110.

Specifically, the first and second plates 131 and 132 are not used to increase the flatness of the battery cell 110, but they are used to allow the electrolyte solution, which is concentrated in the lower end of the battery cell 110, to be sufficiently impregnated in the electrode assembly. Namely, it is to enhance the moving speed of the electrolyte solution concentrated on the lower end of the battery cell 110.

### (Second embodiment)

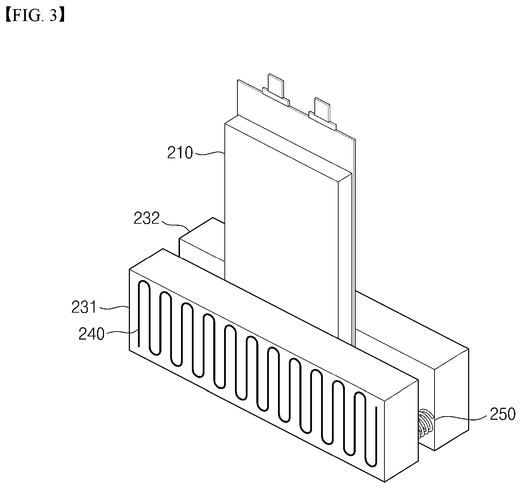

FIG. 3 is a schematic diagram showing a state that a battery cell is disposed between first and second plates in a battery cell tray not according to the present invention.

Referring to FIG. 3, in the battery cell tray according to the present invention, the first and second plates 231 and 232 are configured to support two surfaces of the battery cell while having the battery cell 210 therebetween so that the battery cell 210 can be mounted in an erect state on the tray body. Further, the first and second plates 231 and 232 have a heating member 240 therein.

First, the first and second plates 231 and 232 are disposed in a storage space of a tray body to be movable in a horizontal direction. Herein, the horizontal direction means a direction in which the first and second plates 231 and 232 are moved to become closer to each other or farther away from each other while having a battery cell therebetween. Namely, the first and second plates 231 and 232 may be moved in a direction in which the battery cell 210 is mounted when supporting the battery cell 210, and the first and second plates 231 and 232 may be moved in a direction in which they become farther away from each other in the region where the battery cell 210 has been mounted when removing the battery cell 210.

Further, the first and second plates 231 and 232 include an interval adjusting member 250 which adjusts an interval between the first and second plates 231 and 232. Specifically, the interval adjusting member 250 is a coil spring. One side of the coil spring is connected to the inner surface of the first plate 231, and the other side of the coil spring is connected to the inner surface of the second plate 232. Further, the coil spring is a tension coil spring and is a spring which applies force in a direction in which the first and second plates 231 and 232 are pulled to each other.

The first and second plates 231 and 232 may allow at least one battery cell to be easily disposed by including an interval adjusting member 250.

### (Third embodiment)

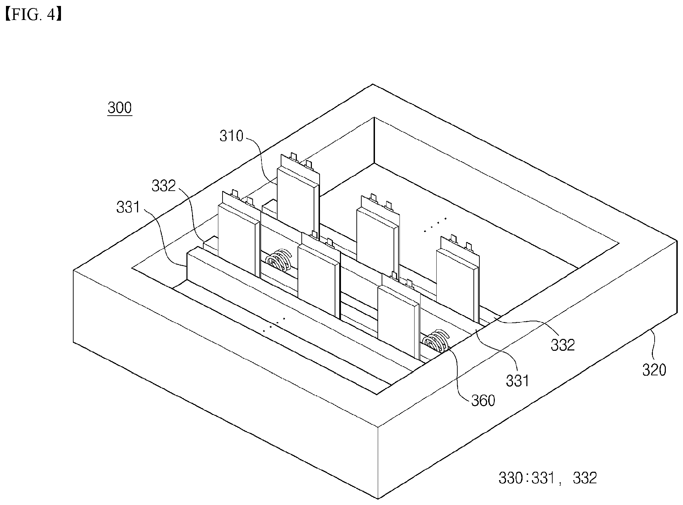

FIG. 4 is a schematic diagram showing a battery cell tray according to the present invention.

Referring to FIG. 4, a battery cell tray 300 according to the present invention includes: a tray body 320 having a storage space therein; and first and second plates 331 and 332 which are arranged in the storage space of the tray body 320, support two surfaces of at least one battery cell 310 to allow the battery cell 310 to be mounted in an erect state, and are moved in a horizontal direction. At this time, the first and second plates 331 and 332 have a heating member (not shown) therein.

Further, the first and second plates 331 and 332 form one pair of plates 330, and n pairs of first and second plates 331 and 332 are included. Herein, the n is an integer equal to or greater than 2. Herein, n is an integer between 2 to 20, 2 to 15, 2 to 10, 2 and 7, or 2 to 4. FIG. 4 illustrates including a total of two pairs of plates 330, but the present invention is not limited to this example.

Further, an elastic pressing member 360 is included between a k-th second plate 332 and a (k+1)-th first plate 331 in the battery cell tray 300 according to the present invention. Herein, the k is an integer equal to or greater than 1 and equal to or less than n-1. Specifically, an elastic pressing member 360 may be disposed between a 1st second plate 332 and a 2nd first plate 331. Constant pressure may be applied to two side surfaces of the plate 331 by the elastic pressing member 360. The elastic pressing member 360 is a member which applies constant pressure in a direction in which a battery cell 310 is disposed.

In the present invention, the elastic pressing member 360 is a coil spring. The coil spring is a spring having a force resistant to the compressive force and refers to a compression spring.

Further, though not illustrated in FIG. 4, an elastic pressing member 360 is also included in a pair of plates 330 arranged in the outermost side of the tray body 320. At this time, the elastic pressing member 360 is disposed between the sidewall of the tray body 320 and the pair of plates 330.

Although preferred examples of the present invention have been described with reference to drawings, it can be understood that those skilled in the art can make various modifications and changes to the present invention without departing from the scope of the invention as set forth in the claims below.

Therefore, the technical scope of the present invention should not be limited to the contents described in the detailed description of the specification but should be defined by the claims.

## Claims

1. A battery cell tray comprising:
a tray body having a storage space therein; and
first and second plates arranged in the storage space of the tray body, the first and second plates being configured to support opposite surfaces of at least one battery cell to allow the battery cell to be mounted in an erect state, the first and second plates being movable in a horizontal direction in the storage space, and each of the first and second plates having a heating member therein;
wherein the first and second plates have a height corresponding to 3/10 to 5/10 of a height of a region of the battery cell having an electrode assembly;
wherein the first and second plates define one pair of plates,
wherein the battery cell tray has n pairs of plates,
wherein n is an integer equal to or greater than 2,
an elastic pressing member is between a k-th second plate and a (k+1)-th first plate, and
wherein k is an integer equal to or greater than 1 and equal to or less than n-1.

2. The battery cell tray of claim 1, wherein each heating member is one of a heat wire, a planar heating element, an induction heater, or an electric heater.

3. The battery cell tray of claim 1, wherein an interval adjusting member is located between the first and second plates to adjust an interval between the first and second plates.

4. The battery cell tray of claim 3, wherein the interval adjusting member is a coil spring or a rubber material.

5. The battery cell tray of claim 1, wherein the elastic pressing member is a coil spring, a leaf spring or a rubber material.

6. The battery cell tray of claim 1, wherein the at least one battery cell is a plurality of battery cells arranged along the first and second plates.

7. A method of activating a battery cell including a positive electrode, a negative electrode, and a separator interposed between the positive electrode and the negative electrode, the method comprising:
mounting the battery cell on the battery cell tray according to claim 1; and
aging the battery cell mounted on the battery cell tray,
wherein the aging of the battery cell includes applying heat in a temperature range of 50 to 80°C to the battery cell.

8. The method of claim 7, wherein the aging is performed for about 12 to 48 hours.

9. The method of claim 7, wherein the applying of heat is performed for about 5 to 15 minutes per hour.

## Patentansprüche

1. Batteriezellenschale, umfassend:
einen Schalenkörper mit einem Aufbewahrungsraum darin; und
erste und zweite Platten, die in dem Aufbewahrungsraum des Schalenkörpers angeordnet sind, wobei die ersten und zweiten Platten konfiguriert sind, um gegenüberliegende Oberflächen von mindestens einer Batteriezelle zu tragen, um zu ermöglichen, dass die Batteriezelle in einem aufrechten Zustand montiert wird, wobei die ersten und zweiten Platten in einer horizontalen Richtung in dem Aufbewahrungsraum beweglich sind und jede der ersten und zweiten Platten ein Heizelement darin aufweist;
wobei die ersten und zweiten Platten eine Höhe aufweisen, die 3/10 bis 5/10 einer Höhe eines Bereichs der Batteriezelle mit einer Elektrodenanordnung entspricht;
wobei die ersten und zweiten Platten ein Plattenpaar definieren,
wobei die Batteriezellenschale n Plattenpaare aufweist,
wobei n eine ganze Zahl gleich oder größer als 2 ist,
ein elastisches Druckelement zwischen einer k-ten zweiten Platte und einer (k+1)-ten ersten Platte ist, und
wobei k eine ganze Zahl gleich oder größer als 1 und gleich oder kleiner als n-1 ist.

2. Batteriezellenschale nach Anspruch 1, wobei jedes Heizelement eines von einem Heizdraht, einem planaren Heizelement, einer Induktionsheizung oder einer elektrischen Heizung ist.

3. Batteriezellenschale nach Anspruch 1, wobei ein Abstandseinstellelement zwischen den ersten und zweiten Platten angeordnet ist, um einen Abstand zwischen den ersten und zweiten Platten einzustellen.

4. Batteriezellenschale nach Anspruch 3, wobei das Abstandseinstellelement eine Schraubenfeder oder ein Gummimaterial ist.

5. Batteriezellenschale nach Anspruch 1, wobei das elastische Druckelement eine Schraubenfeder, eine Blattfeder oder ein Gummimaterial ist.

6. Batteriezellenschale nach Anspruch 1, wobei die mindestens eine Batteriezelle eine Vielzahl von Batteriezellen ist, die entlang der ersten und zweiten Platten angeordnet sind.

7. Verfahren zum Aktivieren einer Batteriezelle, die eine positive Elektrode, eine negative Elektrode und einen Separator, der zwischen der positiven Elektrode und der negativen Elektrode angeordnet ist, umfasst, wobei das Verfahren umfasst:
Montieren der Batteriezelle auf der Batteriezellenschale nach Anspruch 1; und
Altern der Batteriezelle, die auf der Batteriezellenschale montiert ist,
wobei das Altern der Batteriezelle das Anwenden von Wärme in einem Temperaturbereich von 50 bis 80 °C auf die Batteriezelle umfasst.

8. Verfahren nach Anspruch 7, wobei das Altern für etwa 12 bis 48 Stunden durchgeführt wird.

9. Verfahren nach Anspruch 7, wobei das Anwenden von Wärme für etwa 5 bis 15 Minuten pro Stunde durchgeführt wird.

## Revendications

1. Plateau de cellule de batterie comprenant :
un corps de plateau ayant un espace de stockage dans celui-ci ; et
des première et deuxième plaques agencées dans l'espace de stockage du corps de plateau, les première et deuxième plaques étant configurées pour soutenir des surfaces opposées d'au moins une cellule de batterie pour permettre à la cellule de batterie d'être montée dans un état dressé, les première et deuxième plaques étant mobiles dans une direction horizontale dans l'espace de stockage, et chacune des première et deuxième plaques ayant un élément chauffant dans celle-ci ;
dans lequel les première et deuxième plaques ont une hauteur correspondant à 3/10 à 5/10 d'une hauteur d'une région de la cellule de batterie ayant un ensemble électrode ;
dans lequel les première et deuxième plaques définissent une paire de plaques,
dans lequel le plateau de cellule de batterie a n paires de plaques,
dans lequel n est un nombre entier égal à ou supérieur à 2,
un élément de pression élastique se trouve entre une k-ième deuxième plaque et une (k+1)-ième première plaque, et
dans lequel k est un nombre entier égal à ou supérieur à 1 et égal à ou inférieur à n-1.

2. Plateau de cellule de batterie de la revendication 1, dans lequel chaque élément chauffant est un article parmi : un fil métallique de chauffe, un élément chauffant plan, un dispositif de chauffage par induction, ou un dispositif de chauffage électrique.

3. Plateau de cellule de batterie de la revendication 1, dans lequel un élément d'ajustement d'intervalle est situé entre les première et deuxième plaques pour ajuster un intervalle entre les première et deuxième plaques.

4. Plateau de cellule de batterie de la revendication 3, dans lequel l'élément d'ajustement d'intervalle est un ressort hélicoïdal ou un matériau en caoutchouc.

5. Plateau de cellule de batterie de la revendication 1, dans lequel l'élément de pression élastique est un ressort hélicoïdal, un ressort à lames ou un matériau en caoutchouc.

6. Plateau de cellule de batterie de la revendication 1, dans lequel l'au moins une cellule de batterie est une pluralité de cellules de batterie agencées le long des première et deuxième plaques.

7. Procédé d'activation d'une cellule de batterie incluant une électrode positive, une électrode négative, et un séparateur interposé entre l'électrode positive et l'électrode négative, le procédé comprenant :
le montage de la cellule de batterie sur le plateau de cellule de batterie selon la revendication 1 ; et
le vieillissement de la cellule de batterie montée sur le plateau de cellule de batterie,
dans lequel le vieillissement de la cellule de batterie inclut l'application de la chaleur dans une plage de températures de 50 à 80°C à la cellule de batterie.

8. Procédé de la revendication 7, dans lequel le vieillissement est réalisé pendant environ 12 à 48 heures.

9. Procédé de la revendication 7, dans lequel l'application de la chaleur est réalisée pendant environ 5 à 15 minutes par heure.
